# FASCICULE DE BREVET EUROPEEN

(11) **EP 1 210 883 B1**
(45) Date de publication et mention de la délivrance du brevet: **15.06.2005**
(21) Numéro de dépôt: 01125764.9
(22) Date de dépôt: 29.10.2001
(51) Int. Cl.: A43B 13/12, A43B 5/04, B29D 31/515

(54) **Semelle de chaussure de ski de fond**
Sohle für Langlaufskischuh
Sole for country-skiing shoe

(30) Priorité: 29.11.2000 FR 0015431
(43) Date de publication de la demande: 05.06.2002
(73) Titulaire: SALOMON S.A., 74370 Metz-Tessy (FR)
(72) Inventeur: Girard, François, 74290 Veyrier du Lac (FR); Saillet, Benoît, 73410 Albens (FR)

(56) Documents cités:
- EP-A- 0 029 206
- EP-A- 0 595 732
- EP-A- 0 787 440
- EP-A- 0 931 470
- FR-A- 2 600 868
- GB-A- 2 256 784
- US-A- 5 918 338

## Description

Le domaine de l'invention est celui des chaussures, en particulier des chaussures de sport, et plus particulièrement encore des chaussures destinées à des sports imposant aux pieds des mouvements de déroulement/enroulement et/ou à des sports de glisse faisant intervenir des supports du même nom.

La présente invention concerne une semelle, notamment une semelle externe pour une chaussure de ski de fond. Cette semelle est du type de celles comportant un renfort ou un insert en matériau composite ayant vocation à procurer une rigidité en direction transversale (grande raideur en torsion), alliée à une flexibilité longitudinale, notamment dans la zone métatarso-phalangienne (faible raideur longitudinale).

D'autres sports dans lesquels le pied et donc la chaussure sont soumis à des mouvements d'enroulement/déroulement plus ou moins marqués sont -par exemple- la randonnée à pied, la course à pied, le cyclisme, le ski de fond en technique d'évolution dite "à pas alternatif" ou "à pas de patineur", le ski alpin, le ski télémark ou la raquette à neige, ...etc.

L'invention peut s'appliquer également aux sport de glisse sans enroulement/déroulement du pied, comme par exemple le patin à glace, le patin à roulettes avec des roues en ligne ou non, le "snow-board" ou le "skate-board", ... etc.

Les sports susmentionnés ont en commun des contraintes relatives à la chaussure et particulièrement à la semelle, lesquelles contraintes sont, à première vue, incompatibles.

En fait, tous ces sports exigent généralement des déplacements du centre de gravité de l'utilisateur de la zone de talon du pied de l'utilisateur à la zone de la flexion naturelle du pied dite métatarso-phalangienne et vice versa. Ces déplacements servent à la direction et/ou la propulsion du corps de l'utilisateur, par exemple par l'intermédiaire d'une prise de carre ou d'opérations équivalentes, par exemple l'impulsion de mouvement pratiquée en faisant une foulée avec un patin à roulettes ou un ski de fond, que ce soit dans la technique classique ou de skating. Lesdits déplacements du centre de gravité sont accompagnés par une transmission des efforts dans la zone de talon, d'une part, et dans quelques cas d'une flexion dans ladite zone de flexion métatarso-phalangienne, d'autre part.

Il en résulte l'exigence d'une bonne transmission des efforts, sans pertes par amortissement et déformation parasite dans la zone comprise au moins entre le talon et la zone métatarso-phalangienne, et par conséquent une nécessité de rigidité de la semelle dans ladite zone, souvent corollaire à un enroulement/déroulement du pied aussi naturel que possible et par conséquent à une souplesse de la semelle dans la zone métatarso-phalangienne, de façon à pouvoir se prêter à une flexion aisée par rapport à l'articulation métatarso-phalangienne. Cette articulation peut être définie comme étant celle dont l'axe fait un angle de 71° environ avec la tangente interne au pied et coupe l'axe longitudinal médian à 73% environ de la longueur totale du pied à partir du talon.

Il est évident que l'intégration de deux exigences différentes et même incompatibles dans une pièce, à savoir la semelle, n'est généralement effectuée qu'au détriment d'une de ces exigences, à savoir la transmission des efforts provenant de la jambe dans la zone comprise entre le talon et la zone métatarso-phalangienne et/ou la flexibilité dans la dernière zone.

Il en résulte le problème que généralement ladite construction de la semelle ne peut pas satisfaire à toutes les exigences en même temps, et représente généralement un compromis plus ou moins satisfaisant entre rigidité et souplesse.

Un autre problème concerne la fabrication des semelles du type susmentionnées en une seule pièce. Ces semelles représentent des coûts de fabrication assez élevés car il est nécessaire de prévoir des semelles de longueurs spécifiques et différentes pour toutes les pointures désirées. Il en résulte la nécessité de fabriquer et stocker un grand nombre de semelles différentes ou de couper les bords d'une semelle pour fabriquer une pointure au-dessous. Cette dernière technique qui n'est utilisée que pour les semelles d'usure représente un gaspillage de matériau et grève les coûts de production.

Outre les caractéristiques mécaniques de raideur en torsion dans la partie arrière et de souplesse en flexion longitudinale selon l'axe métatarso-phalangienne, d'autres paramètres doivent pris en considération dont notamment : la légèreté, le coût, la faisabilité industrielle, la durabilité...

Il est connu d'utiliser des renforts de tige/empeigne ou de semelle pour tenter de contrôler la rigidité et la flexion. Un certain nombre de propositions techniques antérieures existent, mais aucune ne donne entière satisfaction.

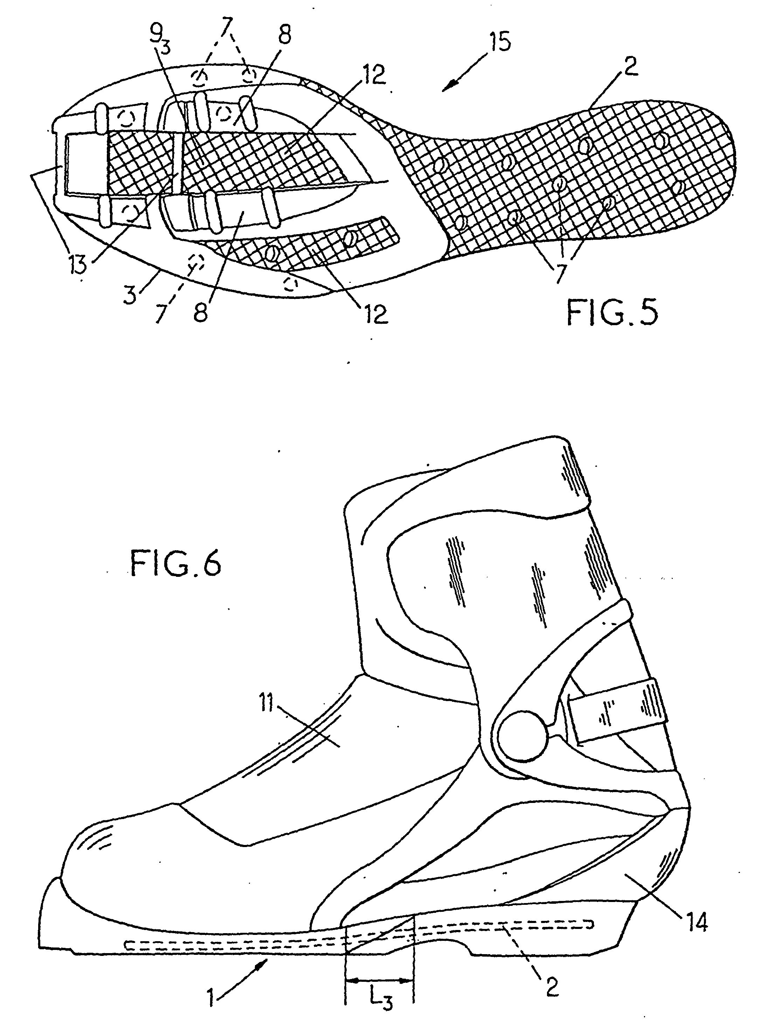

L'EP n°0 931 470 décrit une chaussure de sport comprenant un élément de rigidification intégré dans la partie inférieure (semellage de la chaussure). Cet élément de rigidification est une semelle intérieure ou extérieure ou un renfort interne de type sandwich comprenant une âme 15 réalisée en mousse plastique expansée (en bois léger, en cylindres plastiques d'entretoise, en noyau alvéolaire ou en nid d'abeille), cette âme étant intercalée entre deux peaux 13 et 14 à base de polymère (nylon, polyuréthane, polypropylène), de résine ou de matériau composite comprenant des résines synthétiques dans lesquelles sont incluses des fibres de carbone, d'aramide ou de verre. La rigidité des peaux 13 et 14 est supérieure à celle de l'âme 15. L'épaisseur de cette dernière est supérieure à celle des peaux 13 et 14. Il ressort de la figure 5 et du texte colonne 3 lignes 41 à 53 de l'EP n°0 931 470 que l'élément de rigidification peut comprendre des parties de section variable et de différentes flexibilités, en particulier ayant une plus grande flexibilité longitudinale sur l'avant-pied.

Le renfort sandwich selon l'EP n°0 931 470 est destiné à apporter de la rigidité au semellage de façon à le rendre rigide ou au moins semi-rigide. Les applications visées sont des chaussures de montagne, chaussures de cyclisme et les bottes pour patins à roulette. Dans toutes ces applications, il est clair que l'on ne recherche pas une flexibilité longitudinale au niveau métatarso-phalangien, telle qu'elle permette des mouvements d'enroulé/déroulé par rapport à la pointe avant fixe du pied de la chaussure. En outre, cet élément de rigidification complique la fabrication et apparaît perfectible en ce qui concerne ces propriétés mécaniques.

Le brevet français n°2 600 868 (86 10130) se rapporte à une semelle de chaussure de ski de fond, raide en torsion et flexible en direction longitudinale. Cette semelle comporte un renfort situé au moins dans la région métatarso-phalangienne et correspondant à une première de montage constituée par une feuille composite (fibres de verre de carbone ou d'aramide noyées dans des résines époxy ou polyester). Cette feuille composite a pour caractéristique d'avoir des fibres orientées dans deux ou trois directions par rapport à l'axe longitudinal de la semelle (tissu polydirectionnel). Cela est sensé permettre l'obtention des raideurs souhaitées en direction longitudinale transversale et en torsion. Par ailleurs, cette semelle de chaussure ne présente pas des qualités optimales au regard de la rigidité transversale donc de la conduite du ski, de la flexibilité, de la durabilité, de la légèreté, du rendement, de la régularité et de la sensibilité du mouvement enroulé/déroulé ainsi qu'au regard de la protection du pied lors des flexions.

La demande de brevet français n°2 682 011 (91 12376) concerne une chaussure de ski de fond dont la raideur en torsion et la flexibilité longitudinale dans la zone métatarso-phalangienne sont améliorées et qui comporte une semelle externe recouverte par une première de montage interne définissant entre elles une zone d'assemblage périphérique dite de prise de montage, permettant de solidariser la tige et l'empeigne avec la partie inférieure de la chaussure. La semelle externe présente des propriétés de rigidité en torsion et elle est montée en combinaison avec la première de montage réalisée en un matériau souple en flexion (caoutchouc) dans une zone correspondant à la partie avant du pied. La première de montage est par ailleurs réalisée en fibres de cuir ou de cellulose dans sa région terminale antérieure correspondant à la zone des phalanges, tandis que la partie arrière est faite par exemple de carton.

Dans cette chaussure, la raideur en torsion dans la zone de l'axe de flexion métatarso-phalangienne, et donc le contrôle du ski, restent perfectibles.

En outre, cette chaussure pourrait être également améliorée en ce qui concerne l'optimisation du rendement, qui découle de l'effet ressort dans cette zone de l'axe de flexion métatarso-phalangienne.

Enfin, les matériaux employés dans la première de montage de cette chaussure ne présentent pas toutes les garanties souhaitables en matière de stabilité des propriétés mécaniques dans le temps.

L'art antérieur comprend également un certain nombre de références qui portent plus spécifiquement sur des semelles et que l'on évoquera ci-après.

Dans le document US n°2 581 524, il est proposé de fabriquer une semelle intermédiaire en deux parties. Cependant, ladite semelle est destinée à une chaussure de loisir et en conséquence la partie arrière, bien qu'elle ait une rigidité plus élevée par rapport à la partie avant, reste flexible. La flexibilité et un certain amortissement de la partie arrière sont obtenus en la fabriquant en des matériaux comme le liège, sciure de bois ou latex. La semelle connue dudit document n'est par conséquent pas capable de transmettre des efforts destinés par exemple à une prise de carres, et n'apporte donc pas de solution satisfaisante aux problèmes décrits ci-dessus.

Il en va de même en ce qui concerne l'enseignement des brevets US n° 1 428 356 et n°3 984 925.

La demande de brevet français n°2 743 989 est relative à une semelle notamment pour une chaussure destinée à des sports exigeant un déroulement du pied ou à des sports de glisse. Ce document décrit une semelle externe constituée d'une partie avant et d'une partie arrière. La partie arrière couvre au moins la base du talon et s'étend jusqu'à la zone de flexion métatarso-phalangienne. Elle est rigide et substantiellement non flexible. La partie avant est quant à elle flexible, et présente à son extrémité correspondant à l'extrémité du pied au moins un organe d'accouplement avec un support de glisse tel qu'un ski de fond. Les parties avant et arrière adjacentes se chevauchent dans la zone de jonction où elles sont assemblées par collage ou rivetage. Dans la zone de jonction ou d'assemblage, l'extrémité concernée de la partie avant est chevauchée par l'extrémité correspondante de la partie arrière. Un contrefort de la tige peut être fixé solidairement sur la partie arrière.

Il s'avère qu'une telle semelle peut encore être améliorée en termes de rigidité en torsion et de possibilité de flexion au niveau de l'articulation métatarso-phalangienne.

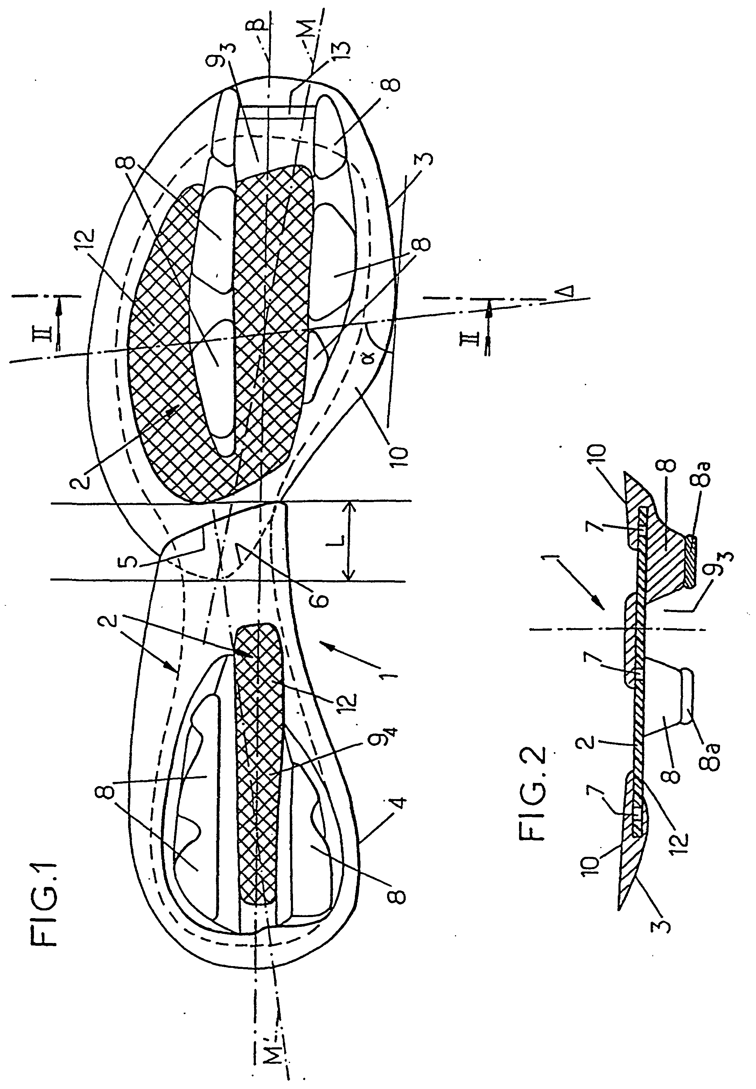

Le brevet allemand DE 41 20 136 concerne une semelle de chaussure, en particulier une semelle de chaussure de sport, qui est, d'une part, suffisamment flexible dans la région de l'avant pied, pour ne pas entraver les mouvements d'enroulement/déroulement du pied, et qui est, d'autre part, suffisamment rigide notamment en torsion dans la zone de l'articulation et dans la partie arrière. Cette semelle de chaussure de sport comprend un matériau composite (matrice + fibres tissées ou non) dans lequel les fibres continues sont orientées dans plusieurs directions. Ce matériau composite est ceint dans un corps de semelle disposé sur les bords de la semelle, réalisé en matériau thermoplastique ou élastomère et fixé solidairement au composite par soudage ou liaison chimique, voire par (sur)moulage. Comme montré aux figures 1 et 2, la semelle peut comporter deux plaques composites 71a, 71b respectivement localisées dans la partie avant et dans la partie arrière. Ces deux plaques composites 71a et 71b sont enchâssées et fixées dans un corps de semelle formant un cadre et comprenant un pont transversal 72 séparant les deux plaques 7 1a et 71b .

Comme montré à la figure 6, cette semelle peut comporter un seul élément ou plaque composite 171 s'étendant sur toute la longueur et assurant une rigidité transversale. Dans ce mode de réalisation, la partie arrière comprend une deuxième plaque composite 67 à rigidité longitudinale, diagonale ou isotrope. Il est prévu également une couche 68 en caoutchouc intercalé entre les plaques composites 171 et 67 dans la partie arrière.

Il doit être remarqué que le corps de semelle périphérique formant un cadre dans lequel sont enchâssées et fixées la ou les plaques composites, est monobloc. On se trouve donc en présence ici du problème relatif à la fabrication industrielle des semelles en une seule pièce pour plusieurs pointures. Les inconvénients en termes économiques et en termes de faisabilité liés à ce problème, ont été présentés ci-dessus.

Au surplus, ce type de semelle connue n'offre pas la possibilité de prévoir des éléments en saillie sur la face inférieure de la semelle, comme par exemple des rainures centrales de guidage ou des patins d'adhérence anti-usure...

Par ailleurs, la semelle selon le DE 41 20 136 comporte un nombre relativement important d'éléments, ce qui complique sa fabrication industrielle.

Enfin, les caractéristiques mécaniques (optimisation du rendement, élasticité, résistance), le poids, la durabilité ne sont pas optimisés.

Le document US-5.918.338 décrit une chaussure dont la semelle est constituée essentiellement par une pièce composite qui est flexible à l'avant rigide sous l'arche du pied et dont la partie arrière est indifféremment rigide ou flexible.

Force est donc de constater que les propositions techniques antérieures ne sont pas complètement satisfaisantes ou sont inadaptées à la résolution du problème technique global consistant à :
- augmenter la raideur en torsion :
   - de façon à améliorer la conduite et le contrôle de l'engin de sport, notamment de glisse (e.g. ski), tout en optimisant l'aptitude à la flexion dans la zone métatarso-phalangienne,
   - et de façon à permettre la perception par le pied des réactions du terrain et de l'engin,
- optimiser la souplesse en flexion, de façon à permettre un mouvement d'enroulé/déroulé régulier et aisé du pied ;
- améliorer le rendement de la chaussure en optimisant l'effet ressort dans la zone métatarso-phalangienne, sans nuire à la flexibilité et à la raideur en torsion ;
- mettre en oeuvre des matériaux répondant aux spécifications mécaniques évoquées ci-dessus, et aptes à conserver ces qualités mécaniques, de manière prolongée dans le temps ;
- gagner encore du poids sur la chaussure ;
- protéger le pied lors des flexions en minimisant les contraintes en compression subies par le pied ;
- maintenir le coût de revient dans des limites acceptables ;
- assurer la faisabilité industrielle ;
- développer un renfort qui puisse être aisément fabriqué au niveau industriel.

L'un des objectifs de la présente invention est de fournir une semelle de chaussure de ski de fond, qui procure des avancées significatives, au regard notamment des spécifications techniques énoncées ci-dessus.

Un autre objectif de l'invention est de proposer une semelle de chaussure de ski de fond permettant notamment l'amélioration du rendement, de la conduite du ski, de la durabilité, tout en conservant ou en gagnant en flexibilité, gain de poids, coût, protection du pied et faisabilité industrielle.

Un autre objectif de la présente invention est de fournir une semelle de chaussure de ski de fond, comprenant un renfort propre à satisfaire au mieux au cahier des charges sus-mentionné.

Un autre objectif de l'invention est de fournir une semelle de faible poids, nécessitant la mise en oeuvre d'un faible volume de matière plastique et susceptible de permettre le remplacement voire la suppression de la première de montage traditionnelle.

Un autre objectif de l'invention est de fournir une semelle de chaussure de ski de fond de structure telle qu'il soit possible de faire varier dans un large éventail les caractéristiques mécaniques sans compliquer exagérément le procédé de fabrication.

Pour satisfaire à ces objectifs parmi d'autres, les inventeurs ont eu le mérite de trouver une semelle flexible à l'avant et rigide à l'arrière grâce à un renfort (par exemple un renfort composite collé ou surmoulé), ce renfort étant assemblé avec deux demi-semelles avant et arrière solidairement fixées l'une à l'autre.

D'où il s'ensuit que la présente invention concerne

Une semelle de chaussure de ski de fond, présentant une partie avant qui comporte une demi-semelle antérieure flexible munie d' un élément d'accouplement avec un support de glisse, et une partie arrière incorporant une demi-semelle postérieure plus rigide en flexion longitudinale que la demi-semelle antérieure, la demi-semelle postérieure étant sensiblement non flexible, et les demi-semelles antérieure et postérieure étant assemblées l'une à l'autre avec chevauchement dans une zone de jonction, de préférence par collage et/ou par rivetage et/ou soudage.
caractérisée en ce que la semelle comporte un renfort qui est réalisé sous la forme d'une plaque de matériau composite et qui est assemblé d'une part sur la demi-semelle antérieure et d'autre part sur la demi-semelle postérieure, et en ce qu'elle comprend un ou plusieurs évidements ménagés au moins dans sa face inférieure et laissant apparaître une partie du renfort.

Conformément à l'invention, la construction de la semelle autour d'un renfort (que l'on peut également qualifier d'âme ou d'insert) en prévoyant deux demi-semelles distinctes pour l'avant et l'arrière (de préférence surmoulé à l'avant) avec un assemblage solidaire de ces deux demi-semelles dans une zone de jonction, contribue à l'obtention des résultats recherchés en termes de flexibilité longitudinale et de raideur en torsion dans la partie avant et de raideur longitudinale et en torsion dans la partie arrière. Il en va de même en ce qui concerne:
* le rendement de la chaussure (effet ressort à l'avant),
* la conduite d'un engin de sport (par exemple un support de glisse) éventuellement accouplé à la semelle de chaussure,
* la durabilité,
* la légèreté,
* l'aisance,
* la précision du mouvement d'enroulé/déroulé du pied et de la chaussure,
* la perception des sensations provenant des réactions du terrain et de l'engin,
* ainsi que la protection du pied lors des flexions.

La rigidité et la non-flexibilité à l'arrière permettent une transmission efficace des efforts qui proviennent de la jambe de l'utilisateur qui sont destinés à la direction ou à la propulsion du corps de l'utilisateur, notamment en permettant une prise de carres efficace ou pour coopérer avec un système de guidage du type arête de guidage en ski de fond.

De préférence, la limite entre la partie avant, sensiblement flexible en direction longitudinale et raide en torsion et la partie arrière rigide en torsion et en direction longitudinale, est localisée sensiblement en arrière de la région de flexion dite métatarso-phalangienne.

Les deux demi-semelles antérieure et postérieure se chevauchent dans la zone de jonction, et la longueur la zone de jonction est réglable en fonction de la pointure.
La longueur de cette zone de jonction est réglable dans certaines limites en fonction de la pointure. La variation de la longueur de chevauchement permet la fabrication de semelles de pointures différentes sur la base de parties arrière et avant respectivement identiques, ce qui réduit considérablement les coûts de production et de stockage par diminution du nombre de pièces différentes devant être fabriquées. Cette construction permet également une meilleure précision de fabrication et d'ajustement des semelles aux chaussures.

Il est clair qu'il existe une limite à la variation de la longueur de chevauchement L (L1, L2). Cette limite tient à la longueur du renfort (par exemple composite) par rapport à la longueur totale de la semelle, mais plus encore à la longueur des demi-semelles.

Conformément à une caractéristique remarquable de l'invention, la demi-semelle postérieure chevauche la demi-semelle antérieure, dans la zone de jonction.
Ainsi, vu de dessous, la région d'extrémité antérieure de la demi-semelle postérieure est située au-dessus et recouvre la région d'extrémité postérieure de la demi-semelle antérieure.

Avantageusement, l'assemblage entre la demi-semelle antérieure et la demi-semelle postérieure est réalisé dans cette zone de jonction/chevauchement.
De préférence, cette dernière est située dans et/ou derrière la région de flexion dite métatarso-phalangienne.

Une telle construction permet d'apporter un gain en poids significatif tout en garantissant grâce au renfort les caractéristiques mécaniques recherchées. On obtient ainsi moins de contraintes en compression du renfort par rapport aux modes de réalisation connus tels que décrits par exemple dans l'EP 0 931 470 dans lesquels le renfort est utilisé comme première de montage ou comme renfort de première de montage.
Le fait que la demi-semelle postérieure chevauche -en vue de dessous- la demi-semelle antérieure dans la zone de jonction/assemblage, assure précisément un meilleur assemblage et permet de prévenir les amorces de décollement de la région d'extrémité postérieure de la demi semelle antérieure qui fléchit, puisque cette dernière est prise en sandwich entre le renfort et la demi semelle postérieure rigide qui ne fléchit pas.

De toute façon, l'invention sera mieux comprise et d'autres caractéristiques de celle-ci seront mises en évidence à l'aide de la description qui suit, en référence aux dessins schématiques annexés qui représentent, à titre d'exemples non limitatifs, plusieurs modes de réalisation et dans lesquels :
- la figure 1 est une vue de dessous d'une semelle selon la présente invention ;
- la figure 2 est une vue en coupe transversale droite selon la ligne II-II de la figure 1 ;
- la figure 3 est une vue de côté d'une semelle ne faisant pas partie de la présente invention ;
- les figues 4a et 4b sont des vues de côté d'une semelle selon le mode préféré de réalisation de l'invention telle que représentée aux figures 1 et 2 ;
- la figure 5 est une vue de dessous d'une pièce intermédiaire de fabrication de la semelle selon l'invention (troisième mode de réalisation) comprenant le renfort sur la région antérieure duquel est surmoulée la demi-semelle antérieure ;
- la figure 6 est une vue latérale d'une chaussure intégrant une semelle selon l'invention (quatrième mode de réalisation) ainsi qu'un contrefort.

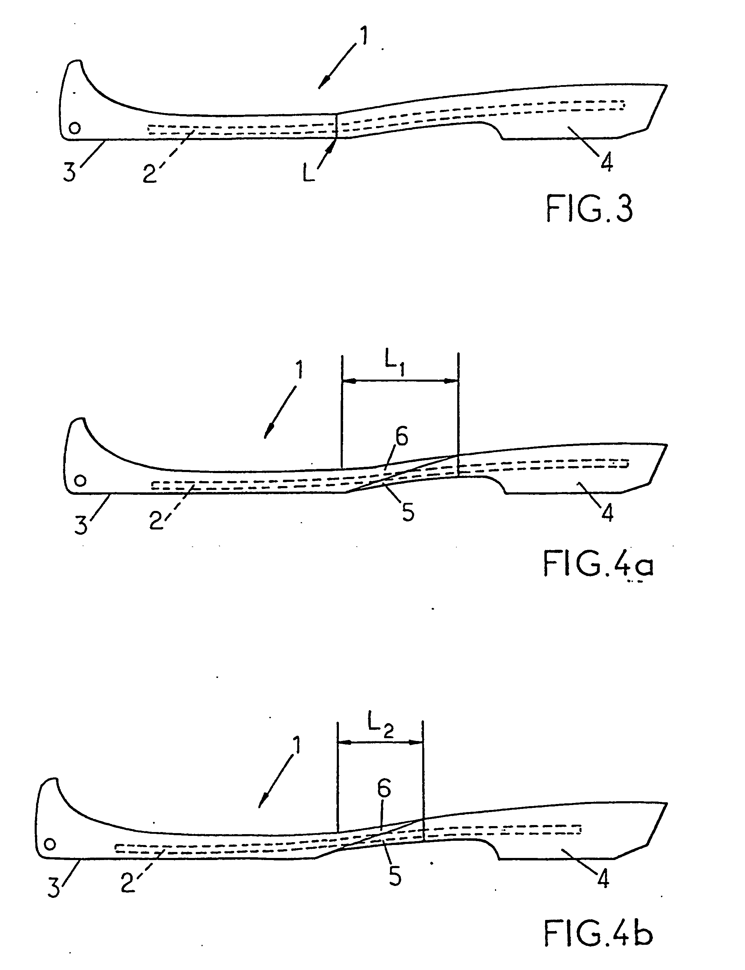

Les figures 1, 2, 4a, 4b correspondent au mode préféré de réalisation de la semelle selon l'invention.
Dans l'exemple non limitatif ici décrit, la semelle selon l'invention est une semelle externe de chaussure de ski de fond, ladite semelle étant désignée par la référence générale 1. Comme cela ressort des figures, cette semelle comprend un renfort 2 -de préférence en matériau composite- qui, dans ce cas, est réalisé sous la forme d'un insert inclus dans deux demi-semelles antérieure et postérieure respectivement désignées par les références 3 et 4. La demi-semelle antérieure 3 et la demi-semelle postérieure 4 font partie intégrante respectivement de la partie avant et de la partie arrière de la semelle 1.
La demi-semelle antérieure 3 et la demi-semelle postérieure 4 sont assemblées l'une à l'autre dans une zone de jonction L,L1,L2,L3 sur les figures 4a, 4b, 6 respectivement, selon un plan de contact qui forme avec le plan de la semelle un angle inférieur à 90°, de préférence inférieur ou égal à 45° (FIG 4a, 4b, 6 : mode préféré et 4^{ème} mode de réalisation).
L'assemblage des demi-semelles 3, 4 selon ce plan de contact est réalisé par tout moyen approprié connu de l'homme de l'art, par exemple par soudage et/ou collage et/ou rivetage.

Dans le mode préféré et le 4^{ème} mode de réalisation montrés aux figures 1, 4a, 4b et 6, cette zone de jonction correspond à la région mitoyenne de la semelle 1 dans laquelle, au-dessus et en dessous du renfort 2, au moins une partie de la région d'extrémité antérieure 5 de la demi-semelle postérieure 4 chevauche (ou recouvre) en vue de dessous, la région d'extrémité postérieure 6 de la demi-semelle antérieure 3. Cela apparaît bien notamment sur les figures 4a, 4b et 6 dans lesquelles les zones de jonction/chevauchement sont référencées L1, L2, L3.
Comme montré aux figures 1, 4a, 4b et 6, la partie d'extrémité postérieure 6 de la demi-semelle antérieure 3 est biseautée et est recouverte (en vue de dessous) par la partie d'extrémité arrière 5, également biseautée, de la demi-semelle postérieure 4, en dessous du renfort 2.
Conformément à l'invention, chaque demi-semelle antérieure 3 ou postérieure 4 comprend de la matière constitutive localisée en dessous du renfort 2, laquelle matière peut ou non s'étendre au-dessus du renfort 2.
Dans le mode préféré de réalisation de la semelle représentée aux figures 1 et 2, la demi-semelle antérieure 3 englobe au moins partiellement l'avant du renfort 2, de sorte que la matière constitutive de la demi-semelle antérieure 3 est présente en dessous et au-dessus du renfort 2. En revanche, la demi-semelle postérieure 4 ne déborde pas ou pratiquement pas au-dessus de l'arrière du renfort 2.

Il en va différemment dans les modes de réalisation montrés aux figures 3, 4a, 4b et 6, selon lesquels le renfort 2 est inclus dans les deux demi-semelles antérieure 3 et postérieure 4, de sorte que la matière constitutive de ces demi-semelles est présente en dessous et au-dessus du renfort 2.

S'agissant du renfort 2, il est de préférence constitué par au moins une plaque stratifiée ou non, s'étendant, à partir de la zone de jonction, à la fois sur au moins la moitié de la partie avant et sur au moins la moitié de la partie arrière.

Avantageusement, le renfort 2 a une longueur correspondant sensiblement à au moins 60%, de préférence au moins 70% et plus préférentiellement encore au moins 80% de la longueur de la semelle.

Il est également préférable que la plaque composite 2 formant le renfort ait une forme correspondant sensiblement à la forme de la projection sur un plan d'un pied humain posé sur ce plan de projection. En pratique, la longueur totale de la plaque 2 correspond sensiblement à 90% de la longueur totale de la semelle 1.

Selon une modalité avantageuse de l'invention, au moins l'une de ses parties avant 3 ou arrière 4 est conçue pour coopérer avec un engin de sport.
En pratique, c'est naturellement la face inférieure de la semelle 1, ou plus exactement de la demi-semelle antérieure 3 et/ou postérieure 4 qui a une forme et des moyens prévus pour coopérer avec un engin de sport, par exemple un ski de fond. Ainsi, la ou lès demi-semelles 3, 4 peuvent en elles-mêmes être constituées par au moins une pièce de guidage et/ou de liaison 8, 8a, 9₃, 9₄, 13 à un engin de sport.
D'où il s'ensuit que selon une variante avantageuse de l'invention, la semelle 1 comprend sur sa face inférieure, dans la partie avant et/ou la partie arrière :
- au moins un organe de guidage 8, 9₃, 9₄ destiné à coopérer avec des moyens de guidage de forme complémentaire prévus sur un engin de sport -de préférence un support de glisse (par exemple un ski de fond)- avec lequel la semelle 1 est conçue pour être accouplée ;
- et éventuellement, au moins un patin 8a adhérent et anti-usure.

En outre, selon une autre variante intéressante de l'invention, la semelle 1, en particulier la partie avant et plus particulièrement encore, comprend au moins un organe d'accouplement 13 avec un engin de sport -de préférence un support de glisse (par exemple un ski de fond)-.

Conformément à un mode de réalisation de l'invention, au moins l'une des demi-semelles antérieure 3 ou postérieure 4 (de préférence antérieure) est surmoulée sur le renfort 2, ce surmoulage étant choisi de préférence parmi les matières plastiques moulables, renforcées ou non et de qualités mécaniques appropriées pour la rigidité de la partie arrière et pour la flexibilité de la partie avant.
De manière plus préférée encore, la demi-semelle antérieure 3 est surmoulée sur l'avant du renfort 2 (FIG 5) et la demi-semelle postérieure 4 est collée sur l'arrière du renfort 2.
Cependant, il est aussi possible que le renfort soit assemblé sur les deux demi-semelles par d'autres techniques d'assemblage telles que le collage ou le rivetage.
On reviendra plus en détail dans ce qui suit sur la nature du ou des matériaux matriciels constitutifs de la demi-semelle antérieure 3 et de la demi-semelle postérieure 4 assemblées l'une à l'autre dans la zone de jonction/chevauchement (L, L1, L2, L3).

Avantageusement, le renfort 2 est réalisé en matière composite. Il peut ainsi être constitué d'une matrice (par exemple une résine thermoplastique ou thermodurcissable) dans laquelle sont noyées des fibres de renfort courtes ou longues. Le renfort 2 peut encore être réalisé sous la forme d'un stratifié composite comportant une ou plusieurs couches textiles, tissées ou non, qui sont enduites et noyées dans une matrice, de préférence thermodurcissable telle que les résines polyester ou époxy. Les fibres textiles utilisées sont par exemple des fibres de verre, de carbone ou de polyaramide.
Selon un mode de réalisation perfectionné, le renfort 2 est formée par une plaque en structure de type sandwich comportant une âme intercalée entre deux peaux mono ou multicouches. Dans le cas où la structure sandwich présente une épaisseur inférieure ou égale à 3 mm, on parlera de structure "microsandwich", une telle structure "microsandwich" étant de préférence prévue(s) dans la partie arrière.
Les structures "sandwich" sont connues dans le domaine des matériaux composites. Classiquement, au moins l'une des peaux (de préférence les deux) des structures "sandwich" sont en matériau composite à base de fibres tissées ou non et incluses dans une matrice.

Les peaux externes sont constituées par un matériau sélectionné dans le groupe de composites suivants :
- les composites :
   - dont la matrice est en résine polymère thermodurcissable telle que les résines époxy, les résines phénoliques, les résines polyester... et leurs mélanges,
   - et dont la matière fibreuse tissée ou non comprend des fibres en polyéthylène, en verre, en carbone, en polyaramide (poly-paraphénylène-téréphthalamide: KEYLAR®), des fibres métalliques, des fibres polyéthylène, des fibres textiles naturelles ou synthétiques et leurs mélanges ; les fibres de carbone et de verre étant plus particulièrement préférées ;
- les composites :
   - dont la matrice polymère est en polymère thermoplastique, avantageusement en polyamide, en polyuréthane, en polyoléfine ou en polyacrylobutadiène styrène (ABS), ... et leurs mélanges,
   - et dont la matière fibreuse tissée ou non comprend des fibres en verre, en carbone, en poly-paraphénylène-téréphthalamide (KEVLAR®), des fibres métalliques, des fibres textiles naturelles ou synthétiques et leurs mélanges ; les fibres de carbone et de verre étant particulièrement préférées ;
- les stratifiés composites au moins en partie constitués par une ou plusieurs feuilles composites micro-sandwich ayant chacune une épaisseur inférieure ou égale à 3 mm et comportant une âme intercalée entre au moins deux peaux composites.

A titre d'exemples de fibres pouvant être utilisées dans ces composites, on peut citer celles données dans le tableau ci-après qui fait mention du type de nappes de tissage et des caractéristiques mécaniques de ces réseaux ou nappes fibreuses.

| **Fibres** | **Tissage** | **Contrainte à la rupture supérieure à** | **Module supérieur à** |
|---|---|---|---|
| Verre | Unidirectionnel | 700 MPa | 25000 MPa |
| Verre | Multidirectionnel | 350 MPa | 12000 MPa |
| Carbone | Unidirectionnel | 1500 MPa | 70000 MPa |
| Carbone | Multidirectionnel | 700 MPa | 35000 MPa |

Avantageusement, l'âme de la structure sandwich est réalisée en mousse synthétique, préférence polyuréthane, polyméthacrylite, polychlorure de vinyle, en bois ou en nid d'abeilles, noyaux alvéolaires. Dans le cas des structures "microsandwich", l'âme pourra être une structure composite présentant des caractéristiques mécaniques et/ou de coût inférieures à celles des peaux. On pourra ainsi utiliser des structures composites comportant du papier ou de la soie noyées dans une matrice.
Outre les composites, le renfort 2 peut être réalisé en tout matériau approprié, par exemple en bois, en métal (acier), en polymère thermoplastique...

Selon une variante avantageuse de l'invention, le renfort 2 (composite ou non) est une plaque revêtue sur au moins l'une de ses faces d'au moins une couche de compatibilisation destinée à promouvoir la compatibilité entre le renfort 2 et la (ou les) demi-semelles 3 et 4, de préférence plastique(s) surmoulée(s), ou entre le renfort 2 et la tige de la chaussure, ou encore entre le renfort 2 (composite ou non) et la demi-semelle arrière. Cette couche est avantageusement constituée par au moins un polymère filmogène synthétique, en particulier choisi dans le groupe comprenant les polyamides et/ou les polyoléfines et/ou les polyuréthanes.

Selon d'autres variantes encore, le renfort 2 peut être composé de plusieurs plaques ou couches composites au moins partiellement superposées ou non.
Il est également envisageable que le renfort 2 (e.g. composite), en l'occurrence la plaque, n'ait pas la forme du pied et occupe une surface nettement moindre que celle correspondant au mode préféré de réalisation (à savoir 90% de la surface de la semelle).

Dans un mode de réalisation, le renfort 2 est en composite du type mono-couche formée par une matrice en époxy renforcée par des fibres de carbone tissées.

On s'attardera dans ce qui suit sur les demi-semelles 3 et 4 respectivement antérieure et postérieure.
Comme indiqué ci-dessus, les demi-semelles antérieure et postérieure 3, 4 présentent, dans le mode préféré de réalisation, sur leur face inférieure, des blocs ou nervures de guidage 8 qui définissent une rainure de guidage 93, 94, selon l'axe longitudinal β de la semelle 1. Une partie 93 de cette rainure de guidage 9 est disposée dans la partie avant sur la demi-semelle antérieure 3, et une autre partie 94 de cette rainure de guidage 9 est localisée dans la partie arrière, sur la demi-semelle postérieure 4.
Cette rainure de guidage 93, 94 est destinée à coopérer avec une nervure de forme complémentaire prévue sur un support de glisse, à savoir en l'occurrence un ski de fond.
En l'occurrence, ces blocs ou nervures de guidage 8 sont constitués par des sortes de poutres en direction longitudinale et destinées à coopérer avec arête de guidage de forme associée de la fixation.
Outre, le fait qu'ils définissent la rainure de guidage 93, 94, ces blocs ou nervures 8 ont pour fonction, grâce aux patins anti-glissement 8a dont ils sont chacun munis, d'améliorer l'adhérence de la semelle de la chaussure sur le support avec lequel elle coopère. Ils ont également pour rôle de conférer à la semelle des propriétés anti-usure, et notamment une résistance à l'abrasion.
Il est également à noter que l'axe longitudinal médian (M) de la partie avant forme un angle avec l'axe longitudinal médian (M') de la partie arrière (figure 1).
Cette figure 1 montre également l'axe Δ d'articulation métatarso-phalangienne qui correspond sensiblement à l'axe de flexion de la partie avant de la semelle 1. Cet axe Δ forme un angle α de l'ordre de 70° par rapport à la tangente interne de la semelle. En outre, cet axe Δ coupe l'axe longitudinal médian en un point situé environ à 73% de la longueur totale de la semelle 1 selon l'axe β et à partir du talon.
Sur leur face supérieure, les demi-semelles antérieure et postérieure, respectivement 3, 4, présentent une bordure périphérique 10 (surmoulage) sur au moins une partie de la périphérie de la semelle 1 - en l'occurrence sur toute la périphérie -. Cette bordure périphérique ou planche de collage 10 est destinée à permettre un bon assemblage, par exemple par collage, de la semelle externe 1 avec la tige/empeigne 11 représentée sur la figure 6. Cette planche de collage 10 est conçue de telle sorte qu'elle permet de compenser des imperfections de la tige/empeigne 11, à savoir par exemple : cardage, pli, contrefort...
La semelle 1 comprend un ou plusieurs évidements 12 ménagés au moins dans sa face inférieure et laissant apparaître une partie du renfort -de préférence composite- 2.
Par ailleurs, il ressort également des dessins que la demi-semelle avant 3 comporte au moins un élément d'accouplement 13 avec un support de glisse, par exemple un ski de fond. Dans le présent exemple, il s'agit d'une tige métallique cylindrique transversale, perpendiculaire à l'axe β et fixée solidairement par ses deux extrémités aux flans intérieurs des deux blocs ou nervures de guidage 8, au voisinage de l'extrémité avant de la semelle 1.
Dans le mode de réalisation montré à la figure 5, deux éléments d'accouplement 13 sont prévus.
L'assemblage entre les demi-semelles antérieure 3 et postérieure 4 dans la zone de jonction L est effectué avec chevauchement (figures 1, 4a, 4b, 6). Cet assemblage est réalisé par tous moyens connus et appropriés, comme par exemple le thermosoudage, le collage, ou le rivetage.
La limite avant extrême de la zone de chevauchement L,L1,L2 est avantageusement constituée par l'axe Δ d'articulation métatarso-phalangienne. Pour des raisons de progressivité, de confort et afin d'assurer un meilleur enroulement/déroulement du pied, sans rupture, la zone de jonction/chevauchement L,L1,L2 a de préférence une rigidité comprise entre celle de la partie arrière et de la partie avant, voire même une rigidité allant en diminuant progressivement depuis sa zone de jonction avec la partie arrière, jusqu'à sa zone de jonction avec la partie avant pour une parfaite transition avec ces deux rigidités extrêmes.
Comme cela ressort des figures 4a et 4b, il est possible lors du chevauchement des extrémités avant 6 et arrière 5 des demi-semelles 3, 4 -respectivement-, de faire varier la longueur L,L1,L2,L3 de la zone de jonction/chevauchement en modifiant le degré de chevauchement. Sur la figure 4a, la semelle a une zone de jonction de longueur L1 et sur la figure 4b celle-ci présente une longueur L2 inférieure, de sorte que la longueur totale P1 de la semelle 1 de la figure 4a est inférieure à la longueur totale P2 (pointure) de la semelle 1 de la figure 4b. La marge de variation est par exemple comprise entre 14 et 21 mm. Cela permet de couvrir, avec une seule dimension des parties avant et arrière 3 et 4, deux à trois pointures de chaussure, avec un renfort 2 de longueur donnée et sans modifier significativement les paramètres de fabrication, qui seront développés ci-après.
Selon une variante, le renfort 2 présente, dans la partie arrière de la semelle, un ou plusieurs prolongements vers le haut (par exemple au niveau du talon) pour augmenter la rigidité en torsion.

Selon une autre alternative, cumulable ou non à la susdite variante, ce renfort 2 peut être associé à au moins un autre renfort, de préférence à l'arrière, en vue d'augmenter la rigidité de cette partie.
Il est également envisageable que le renfort 2 présente des ondulations longitudinales au moins dans la zone de flexion métatarso-phalangienne, pour augmenter la raideur en torsion sans augmenter la raideur en flexion.
La demi-semelle postérieure 4 est de préférence rigide et sensiblement non flexible de manière à éviter des pertes d'énergie par amortissement et déformation parasite, ce qui permet une meilleure transmission des efforts. A cette fin, le matériau matriciel sélectionné est avantageusement constitué par une matière plastique (thermoplastique) de rigidité appropriée, éventuellement renforcée par des fibres en verre ou en carbone ou matériau métallique. A titre d'exemples de matériaux plastiques matriciels arrière, on peut citer : polyamides (ZITEL^{tm}), polyuréthanes, polyacétates, polyoxyméthylène, polycarbonates, polyéther-bloc-amide... En tout état de cause, les matériaux de la partie arrière et du renfort composite sont choisis de telle sorte que cette partie arrière ait de préférence un module d'élasticité compris entre 260 MPa et 200 000 MPa.
La demi-semelle antérieure 3 est quant à elle flexible pour permettre les mouvements d'enroulement/déroulement du pied aussi naturellement que possible. Le ou les matériaux mis en oeuvre pour l'ensemble matriciel avant 3 seront donc choisis en tenant compte des propres qualités mécaniques du renfort composite 2 dans la partie avant. Il s'agira par exemple de matériaux plastiques (thermoplastiques) convenant pour les techniques de moulage. A titre d'exemples de tels matériaux plastiques, on peut citer : , polyéther-bloc-amides (Pebax^{tm}), polyamides, polyuréthanes, polyacétates, polyoxyméthylène, polycarbonates...
Il est clair que chaque demi-semelle antérieure 3 ou postérieure 4 pourra être constituée de plusieurs matériaux différents. En l'occurrence, les patins d'adhérence et anti-usure 8a sont constitués d'un matériau distinct du reste de la demi-semelle. Il peut s'agir par exemple d'élastomères [type caoutchouc, styrène-butadiène : "Styrene-Butadiene Rubber" (SBR)], élastomères thermoplastiques [type "thermoplastic-rubber"] ou des thermoplastiques [type polyuréthane (PU), polyéthylène butadiène (PEBA), polyamide (PA)].

La figure 5 montre une pièce intermédiaire 15 de fabrication de la semelle 1 selon l'invention. Cette pièce intermédiaire ne comprend que la demi-semelle antérieure 3, à laquelle est assemblée le renfort 2. Dans le mode de réalisation illustré, cet assemblage est assuré par surmoulage de la demi-semelle antérieure autour de la partie avant du renfort 3. Le renfort formé par une plaque composite 2 comportant des perforations 7 destinées à permettre le passage de ponts de matériau(x) plastique(s) de (sur)moulage formant ou la ou les demi-semelles antérieure 3 et postérieure 4 et reliant les parties de la ou des demi-semelles situées au-dessus et en dessous du renfort 2. Ces perforations 7 ont pour but de permettre que, dans le cadre d'une réalisation de la semelle par surmoulage du renfort composite 2 par de la matière matricielle plastique, cette dernière traverse le renfort composite. Cela permet d'améliorer la fixation mécanique de la ou des demi-semelles 3, 4, surmoulées sur le renfort composite 2. En l'occurrence, cette pièce intermédiaire comprend uniquement le renfort composite 2 avec des perforations 7, lequel renfort composite est surmoulé par l'ensemble matriciel avant 3 qui comporte des blocs de guidage 8, une rainure 9₃ et des tiges transversales d'accouplement au ski de fond 13.
Avantageusement, les tiges métalliques transversales 13 utiles comme organes d'accouplement, sont solidarisées à l'ensemble matriciel avant 3, dans la région du nez de la semelle 1, lors du surmoulage.

La figure 6 montre une chaussure comportant une semelle externe 1 selon un quatrième mode de réalisation de l'invention. Cette semelle est solidaire d'une tige/empeigne 11, et comporte, dans sa partie arrière, un contrefort 14.
Cette partie arrière forme un ensemble monobloc avec le contrefort 14 qui couvre le talon, la partie arrière ayant de préférence une rigidité différente de, et plus préférentiellement encore supérieure, à celle du contrefort 14.
Ce contrefort 14 entoure le talon du pied à la manière d'une coque. De préférence, ledit contrefort 14 s'étend de la zone du talon jusqu'à la zone L3 de chevauchement. L'effet de tenue, à la manière d'une coque du talon de pied par l'ensemble mono-bloc formé par la partie arrière de la semelle 1 et le contrefort 14, est nettement amélioré lorsque le contrefort 14 est sensiblement rigide et d'une rigidité similaire à celle de la semelle. De préférence, la rigidité du contrefort 14 est inférieure à la rigidité de la partie arrière de la semelle 1 non flexible. Le choix de rigidité pour le contrefort 14, la partie et la demi-semelle postérieure 4 de la semelle 1, respectivement, peut être effectué d'une manière optimale en choisissant ou non un même matériau pour ces trois éléments, tout en gardant l'ensemble mono-bloc. Les matériaux préférés pour le contrefort 14 sont le cuir ou les matériaux plastiques éventuellement renforcés par des inserts en matière métallique ou des fibres de verre ou carbone.
Selon une caractéristique avantageuse de l'invention, la demi-semelle antérieure 3, la demi-semelle postérieure 4, le renfort 2 et éventuellement le contrefort 14 (figure 6), sont réalisés dans des matériaux différents.
Avantageusement, on pourrait associer le contrefort 14 avec d'éventuels prolongements vers le haut (ou remontées latérales) évoqués ci-dessus et non représentés sur les dessins. Ces deux éléments pourraient ainsi coopérer pour apporter plus de rigidité en torsion.
Un procédé de fabrication consiste essentiellement:
1) à mettre en oeuvre une plaque 2 destinée à être le renfort de la semelle 1 et ayant une forme correspondant sensiblement à la forme de la projection sur un plan d'un pied humain posé sur ce plan ;
2) à assembler (par collage, rivetage ou surmoulage) le renfort 2 à une demi-semelle antérieure 3 pour obtenir une pièce intermédiaire.

Lorsque l'assemblage est obtenu par surmoulage, l'étape d'assemblage consiste:
a) à placer ce renfort 2 dans un moule dont l'empreinte correspond à la forme de la demi-semelle antérieure 3 et/ou postérieure 4 (de préférence antérieure) de la semelle 1 ;
b) éventuellement à placer dans le moule au moins un élément d'accouplement 13 avec un engin de sport de préférence un support de glisse ;
c) surmouler le renfort 2 à l'aide de matériau(x) identiques ou différents entre eux, de préférence différents au moins pour la demi-semelle antérieure 3 et la demi-semelle postérieure 4 ;
d) extraire du moule la pièce intermédiaire 15 formée par le renfort 2 sur lequel est surmoulée la demi-semelle antérieure 3 (ou la demi-semelle postérieure 4).

Dans la suite du procédé, on fixe -par exemple par collage- la demi-semelle postérieure 4 (ou la demi-semelle antérieure 3) sur la pièce intermédiaire 15.
La figure 5 montre la pièce intermédiaire 15, telle qu'obtenue dans le mode préféré de mise en oeuvre décrit ci-dessus.

Selon une variante correspondant à une réalisation des deux demi-semelles 3 et 4 par surmoulage, en deux opérations distinctes de moulage successives :
- on place cette pièce intermédiaire 15 dans un moule de la demi-semelle postérieure 4 (ou antérieure 3), selon une étape a',
- on surmoule la demi-semelle postérieure 4 (ou antérieure 3) selon une étape b',
- on extrait du moule la semelle comportant le renfort 2 surmoulé.

Selon une variante du procédé conduisant à la semelle de la chaussure de la figure 6, on fixe de manière solidaire un contrefort 14 à l'ensemble matriciel arrière de la semelle 1, de façon à ce qu'ils forment un ensemble monobloc.

Du fait de sa conception et de sa fabrication en particulier au moins en partie par surmoulage :
- la semelle selon l'invention présente de faibles épaisseurs de plastique, de sorte que la matrice plastique est moins sensible au vieillissement au regard des propriétés mécaniques ;
- il est envisageable utiliser un seul moule de semelle pour obtenir des caractéristiques mécaniques variables en surmoulant simplement des renforts de forme et d'épaisseur différentes.

Un procédé tout à fait particulier et avantageux de fabriquer une chaussure, notamment de sport consiste essentiellement :
- à mettre en oeuvre la pièce intermédiaire 15,
- à assembler cette dernière - de préférence par collage - avec la partie supérieure de la chaussure (empeigne/tige),
- et à fixer - de préférence par collage - la demi-semelle postérieure 4 (ou la demi-semelle antérieure 3) sur la pièce intermédiaire 15 assemblée à la partie supérieure de la chaussure (empeigne/tige).

Il est à noter que la semelle comportant une ou deux demi-semelles peut être utilisée dans une mode de montage de type "strobel" (tige cousue périphériquement à une semelle "strobel") ce qui permet d'éviter le recours à une première de montage traditionnelle plus rigide et plus lourde, d'où un gain de poids significatif.
Dans tous ces procédés de fabrication de semelle et/ou de chaussure, tous les types d'assemblage classiques peuvent être employés : collage, soudage, surmoulage, vissage, rivetage...

## Revendications

1. Semelle (1) de chaussure de ski de fond, présentant une partie avant qui comporte une demi-semelle antérieure flexible munie d' un élément d'accouplement (13) avec un support de glisse, et une partie arrière incorporant une demi-semelle postérieure plus rigide en flexion longitudinale que la demi-semelle antérieure, la demi-semelle postérieure étant sensiblement non flexible, et les demi-semelles antérieure (3) et postérieure (4) étant assemblées l'une à l'autre avec chevauchement dans une zone de jonction (L,L1,L2,L3), de préférence par collage et/ou par rivetage et/ou soudage.
**caractérisée en ce que** la semelle comporte un renfort qui est réalisé sous la forme d'une plaque de matériau composite et qui est assemblé d'une part sur la demi-semelle antérieure et d'autre part sur la demi-semelle postérieure, et **en ce qu'**elle comprend un ou plusieurs évidements (12) ménagés au moins dans sa face inférieure et laissant apparaître une partie du renfort (2).

2. Semelle (1) selon la revendication 1, **caractérisée en ce que**, dans la partie arrière, le renfort (2) présente un ou plusieurs prolongements vers le haut, et/ou est associé à au moins un autre renfort.

3. Semelle selon l'une quelconque des revendications 1 ou 2, **caractérisée en ce que** la partie arrière forme un ensemble monobloc avec un contrefort (14) couvrant le talon.

4. Semelle (1) selon l'une quelconque des revendications précédentes, **caractérisée en ce que** le renfort (2) s'étend, à partir de la zone de jonction (L,L1,L2,L3), à la fois sur au moins la moitié de la partie avant et sur au moins la moitié de la partie arrière.

5. Semelle (1) selon l'une quelconque des revendications précédentes, **caractérisée en ce que** le renfort (2) a une longueur correspondant sensiblement à au moins 60%, de préférence au moins 70% et plus préférentiellement encore au moins 80% de la longueur de la semelle.

6. Semelle (1) selon l'une quelconque des revendications précédentes, **caractérisée en ce que** la demi-semelle antérieure (3) est surmoulée sur le renfort (2) et **en ce que** la demi-semelle postérieure (4) est collée sur le renfort (2).

7. Semelle (1) selon la revendication 6, **caractérisée en ce que** le renfort (2) est une plaque comportant des perforations (7) destinées à permettre le passage de ponts de matériau(x) de moulage reliant les parties de la ou demi-semelle situées au-dessus et au-dessous du renfort (2).

8. Semelle (1) selon l'une quelconque des revendications 1 à 5, **caractérisée en ce que** le renfort est assemblé aux parties avant et arrière de la semelle par collage.

9. Semelle (1) selon l'une quelconque des revendications préoédentes, **caractérisée en ce que** la demi-semelle antérieure (3), la demi-semelle postérieure (4), le renfort (2) et éventuellement le contrefort (14), sont réalisés dans des matériaux différents.

## Patentansprüche

1. Sohle (1) eines Langlaufskischuhs, einen vorderen Teil aufweisend, der eine flexible vordere Halbsohle umfasst, die mit einem Element zur Kopplung (13) mit einem Gleitträger ausgestattet ist, und einen hinteren Teil, der eine hintere Halbsohle beinhaltet, die in longitudinaler Biegung steifer ist als die vordere Halbsohle, wobei die hintere Halbsohle deutlich nichtflexibel ist, und die vordere (3) und hintere (4) Halbsohle aneinander angebracht sind mit Überlappung in einer Verbindungszone (L, L1, L2, L3), vorzugsweise durch Kleben und/oder durch Vernieten und/oder durch Schweißen,
**dadurch gekennzeichnet, dass** die Sohle eine Verstärkung umfasst, die in Form einer Platte aus Verbundmaterial verwirklicht ist und die einerseits auf der vorderen Halbsohle und andererseits auf der hinteren Halbsohle angebracht ist, und **dadurch**, dass sie eine oder mehrere Vertiefungen (12) aufweist, die mindestens auf ihrer unteren Seite untergebracht sind und einen Teil der Verstärkung (2) erscheinen lassen.

2. Sohle (1) nach Anspruch 1, **dadurch gekennzeichnet, dass**, im hinteren Teil, die Verstärkung (2) eine oder mehrere Verlängerungen nach oben aufweist und/oder mit mindestens einer weiteren Verstärkung verbunden ist.

3. Sohle nach einem der Ansprüche 1 oder 2, **dadurch gekennzeichnet, dass** der hintere Teil mit einer Kappe (14), welche die Ferse bedeckt, eine Gesamtheit aus einem Stück bildet.

4. Sohle (1) nach einem der vorhergehenden Ansprüche, **dadurch gekennzeichnet, dass** die Verstärkung (2) sich ausgehend von der Verbindungszone (L, L1, L2, L3) gleichzeitig auf mindestens die Hälfte des vorderen Teils und auf mindestens die Hälfte des hinteren Teils erstreckt.

5. Sohle (1) nach einem der vorhergehenden Ansprüche, **dadurch gekennzeichnet, dass** die Verstärkung (2) eine Länge besitzt, die deutlich mindestens 60%, vorzugsweise mindestens 70% und noch bevorzugter mindestens 80% der Länge der Sohle entspricht.

6. Sohle (1) nach einem der vorhergehenden Ansprüche, **dadurch gekennzeichnet, dass** die vordere Halbsohle (3) auf die Verstärkung (2) überformt ist und **dadurch**, dass die hintere Halbsohle (4) auf die Verstärkung (2) geklebt ist.

7. Sohle (1) nach Anspruch 6, **dadurch gekennzeichnet, dass** die Verstärkung (2) eine Platte ist, die Perforationen (7) aufweist, die dazu bestimmt sind, den Durchgang von Brücken von Formungs-Material(ien) zu erlauben, welche die Teile der Halbsohle(n) verbinden, die oberhalb und unterhalb der Verstärkung (2) liegen.

8. Sohle (1) nach einem der Ansprüche 1 bis 5, **dadurch gekennzeichnet, dass** die Verstärkung an den vorderen und hinteren Teilen der Sohle durch Kleben angebracht ist.

9. Sohle (1) nach einem der vorhergehenden Ansprüche, **dadurch gekennzeichnet, dass** die vordere Halbsohle (3), die hintere Halbsohle (4), die Verstärkung (2) und eventuell die Kappe (14) aus unterschiedlichen Materialien verwirklicht sind.

## Claims

1. Cross-country ski boot sole (1), having a front portion which comprises a flexible front half-sole equipped with a coupling element (13) with a gliding support, and a rear portion which has a rear half-sole that is more rigid in longitudinal bending than the front half-sole, the rear half-sole being substantially non-bending, and the front (3) and rear (4) half-soles being overlappingly assembled to one another in a junction zone (L, L1, L2, L3), preferably by cementing and/or riveting and/or welding.
**characterized in that** the sole comprises a reinforcement which is made in the form of a composite material plate and which is assembled on the front half-sole, on the one hand, and on the rear half-sole, on the other hand, and **in that** it has one or several recesses (12) provided at least in its lower surface and showing a portion of the reinforcement (2).

2. Sole (1) according to claim 1, **characterized in that**, in the rear portion, the reinforcement (2) has one or several upward extensions and/or is associated with a least one other reinforcement.

3. Sole according to any of claims 1 or 2, **characterized in that** the rear portion forms a unitary assembly with a stiffener (14) covering the heel.

4. Sole (1) according to any of the preceding claims, **characterized in that** the reinforcement (2) extends, from the junction zone (L, L1, L2, L3), both on at least half of the front portion and at least half of the rear portion.

5. Sole (1) according to any of the preceding claims, **characterized in that** the reinforcement (2) has a length corresponding substantially to at least 60 %, preferably at least 70 %, and even more preferably at least 80% of the length of the sole.

6. Sole (1) according to any of the preceding claims, **characterized in that** the front half-sole (3) is duplicate molded on the reinforcement (2), and **in that** the rear half-sole (4) is cemented on the reinforcement (2).

7. Sole (1) according to claim 6, **characterized in that** the reinforcement (2) is a plate comprising perforations (7) adapted to enable the passage of bridges of molding material(s) connecting the portions of the half-sole located above and beneath the reinforcement (2).

8. Sole (1) according to any of claims 1-5, **characterized in that** the reinforcement is assembled to the front and rear portions of the sole by cementing.

9. Sole (1) according to any of the preceding claims, **characterized in that** the front half-sole (3), the rear half-sole (4), the reinforcement (2) and possibly the reinforcement (14) are made of different materials.
